# EUROPÄISCHE PATENTSCHRIFT

(11) **EP 1 225 349 B1**
(45) Veröffentlichungstag und Bekanntmachung des Hinweises auf die Patenterteilung: **20.07.2005**
(21) Anmeldenummer: 01129519.3
(22) Anmeldetag: 11.12.2001
(51) Int. Cl.: F16C 11/06, B23P 11/00

(54) **Fügeverfahren für eine Kugelgelenkverbindung**
Joining method for a ball joint
Procédé d'assemblage d'un joint à rotule

(30) Priorität: 23.01.2001 DE 10102989
(43) Veröffentlichungstag der Anmeldung: 24.07.2002
(73) Patentinhaber: Brueninghaus Hydromatik GmbH, 89275 Elchingen (DE)
(72) Erfinder: Donders, Steven, Dr., 72160 Horb (DE)
(74) Vertreter: Körfer, Thomas, Dipl.-Phys.

(56) Entgegenhaltungen:
- EP-A- 0 371 834
- DE-A- 4 034 766
- US-A- 6 098 518

## Beschreibung

Die Erfindung geht aus von einem Fügeverfahren nach der Gattung des Hauptanspruchs.

Zur Verbindung eines Kolbens einer hydrostatischen Kolbenmaschine mit einem Gleitschuh werden gewöhnlich Kugelgelenkverbindungen eingesetzt. Hierzu ist an dem Gleitschuh eine Gelenkpfanne ausgebildet. An dem Kolben befindet sich an einem Ende ein Kugelkopf. Bei der Montage wird der Kugelkopf des Kolbens in die Gelenkpfanne des Gleitschuhs eingesetzt und der Rand der Gelenkpfanne an die Kugel meist durch Kaltumformen angelegt. Durch das Umformen des Gelenkpfannenrands wird eine nicht lösbare Verbindung zwischen dem Gleitschuh und dem Kolben erzeugt. Diese Kugelgelenkverbindung ist in der Lage, axiale Kräfte sowohl in Form von Zug- als auch von Druckkräften zu übertragen. Aufgrund der hohen Anforderungen im Hinblick auf den Verschleiß wird der Kolben mitsamt dem Kugelkopf aus einem harten Material gefertigt. Der Gleitschuh hingegen ist aus einem weicheren Material angefertigt, das dementsprechend leicht umgeformt werden kann.

Aus der EP 0 371 834 A1 ist ein Verfahren zum Fügen von Gelenkpfanne und Kugelkopf zu einer Kugelgelenkverbindung bekannt. Mit einer Zuführvorrichtung wird der Kolben mit dem Kugelkopf in die Gelenkpfanne des Gleitschuhs eingesetzt und der Gelenkpfannenrand mit Hilfe eines Magnetfeldes umgeformt. Dabei liegen die Mittelachse des Kolbens und die Flächennormale des Gleitschuhs auf einer gemeinsamen Geraden. Die Gelenkpfanne wird somit auf dem Kugelkopf in ihre endgültige Form gebracht. Der Umformvorgang wird wiederum am weicheren Material des Gleitschuhs durchgeführt.

Aufgrund des besseren kinematischen Verhaltens ist es für den Betrieb einer Kolbenmaschine jedoch wünschenswert, den Kugelkopf an dem Gleitschuh und die Gelenkpfanne an dem Kolben anzuordnen. Die federelastischen Eigenschaften des härteren Kolbenmaterials, beispielsweise Nitrierstahl, führen bei einer Kaltumformung der Gelenkpfanne zu einem erhöhten Spiel des Gelenks. Die Lebensdauer der Kugelgelenkverbindung reduziert sich dadurch deutlich. Zudem steigt während des Umformprozesses das Risiko, die aus dem weichen Material gefertigte Kugel zu verformen, so daß sie von einer Kugelgeometrie abweicht. Dies führt ebenfalls zu erhöhtem Verschleiß

Der Erfindung liegt die Aufgabe zugrunde, ein Fügeverfahren zu schaffen, mit dem die Gelenkpfanne kaltumgeformt werden kann, ohne den Kugelkopf zu deformieren und gleichzeitig ein geringes Spiel in der Gelenkverbindung sicherzustellen.

Die Aufgabe wird durch das erfindungsgemäße Fügeverfahren mit den Verfahrensschritten des Hauptanspruchs gelöst. Durch das Neigen der Kolbenmittelachse gegenüber der Flächennormale des Gleitschuhs wird der Kragen der Gelenkpfanne soweit in einen Freistich des Gleitschuhs gebracht, daß bei Verformung des Kragens der Gelenkpfanne auf den Kugelkopf keine Kraft durch den umzuformenden Teil des Kragens übertragen wird. Der Kragen der Gelenkpfanne wird lediglich an einer Stelle mit einer umformenden Kraft beaufschlagt. Das Umlegen des Kragens erfolgt durch Drehung des Kolbens, so daß nach Ablauf mindestens einer vollständigen Umdrehung der gesamte Umfang der Gelenkpfanne umgelegt ist. Die jeweils die Andrückstelle an dem Bördelwerkzeug verlassende Stelle am Umfang der Gelenkpfanne kann entsprechend den federelastischen Eigenschaften des Materials zurückfedern und die endgültige Form einnehmen. Das Verfahren wird so eingestellt, daß sich nach Zurückfedern der Gelenkpfanne auf ihrer Innenseite eine Kugelgeometrie ergibt. Dadurch wird eine spielfreie Verbindung zwischen dem Kolben und dem Gleitschuh erzeugt.

Durch die in den Unteransprüchen aufgeführten Maßnahmen sind vorteilhafte Weiterbildungen des erfindungsgemäßen Fügeverfahrens möglich.

Zur Reduzierung der bei der Verarbeitung auftretenden Antriebskräfte wird vorteilhafterweise der Gleitschuh und damit der Kugelkopf gleichsinnig mit dem Kolben gedreht. Ebenso vorteilhaft ist es, das Bördelwerkzeug ebenfalls zu drehen, so daß an der Andrückstelle das Werkzeug sowie der Kragen der Gelenkpfanne eine identische Umfangsgeschwindigkeit aufweisen.

Insbesondere von Vorteil ist die Verwendung einer auf dem Werkzeug freilaufend angeordneten Rolle zum Erzeugen der Andrückkraft. Ein gesonderter Antrieb des Bördelwerkzeugs kann dadurch entfallen. Die Umfangsgeschwindigkeit der freilaufenden Rolle wird durch die Drehung des Kolbens erzeugt.

Wird der Gleitschuh in axialer Richtung mit einer Federkraft beaufschlagt, so wird der Kugelkopf mit einer immer gleichen Position in der Gelenkpfanne des Kolbens gehalten. Dadurch wird eine besonders spielarme Verbindung ermöglicht. Die zu fügenden Bauteile sowie das Fügeverfahren sind in den Figuren vereinfacht dargestellt und werden in der folgenden Beschreibung erläutert. Es zeigen:
- Fig. 1: eine schematische Darstellung eines Ausführungsbeispiels einer Kugelgelenkverbindung; und
- Fig. 2: eine schematische Darstellung des erfindungsgemäßen Fügeverfahrens.

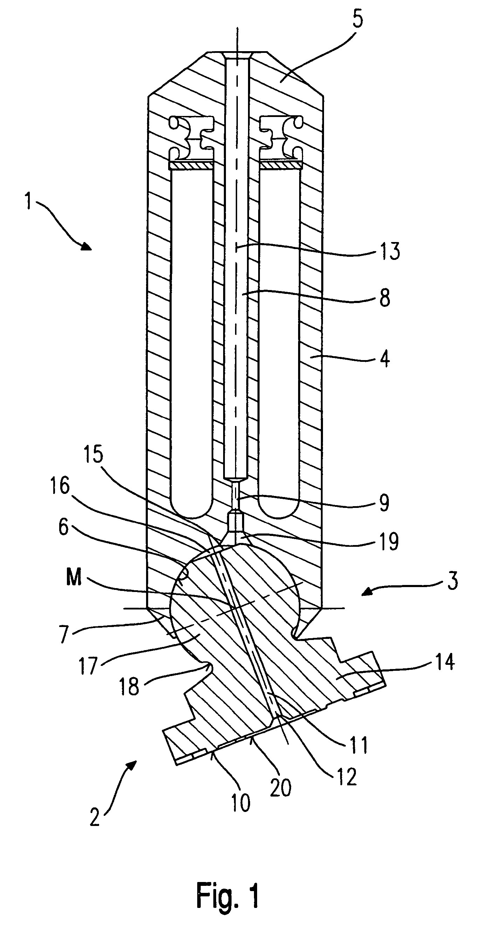

Bevor das erfindungsgemäße Fügeverfahren detailliert beschrieben wird, soll zunächst anhand von Fig. 1 der Aufbau und die Funktion der zu fügenden Bauteile, Kolben und Gleitschuh, erläutert werden.

Fig. 1 zeigt eine Schnittdarstellung eines Kolbens 1 und eines Gleitschuhs 2, die über ein Kugelgelenk 3 so miteinander verbunden sind, daß sich die Bauteile nicht zerstörungsfrei voneinander lösen lassen. Durch das Kugelgelenk 3 ist der Gleitschuh 2 so in dem Kolben 1 gelagert, daß sich die Mittelachse 12 des Gleitschuhs 2 gegen die Mittelachse 13 des Kolbens 1 um den Mittelpunkt M neigen läßt. Ebenso ist eine Rotation zum Beispiel des Kolbens 1 um seine Mittelachse 13 möglich.

Im dargestellten Ausführungsbeispiel ist der Kolben 1 aus einem Kolbenschaft 4 und einem Kolbenboden 5 zusammengesetzt. Als Verbindungstechnik wird das Reibschweißen eingesetzt. Bei Einsatz in einer Axialkolbenpumpe wird während des Pumphubes von dem Kolbenboden 5 das Hydrauliköl gefördert. Im Inneren des Kolbens 1 ist eine Versorgungsbohrung 8 angeordnet, an die sich in Richtung des Kugelgelenks 3 eine Drosselstelle 9 anschließt. Auf der Seite des Kolbenbodens 5 mündet die Versorgungsbohrung 8 in den Zylinderraum der Axialkolbenpumpe aus. Auf der gegenüberliegenden Seite des Kolbens 1 ist eine Gelenkpfanne 6 eingebracht. Vor dem Fügevorgang besteht die Gelenkpfanne 6 aus einem halbkugelförmigen Abschnitt sowie einem Gelenkpfannenrand 7, der vor der Umformung eine näherungsweise zylinderförmige Innenkontur aufweist. Der Innendurchmesser des zylinderförmigen Abschnitts entspricht dem Durchmesser der Gelenkpfanne 6. Über eine Mündungsöffnung 19 ist die Drosselstelle 9 mit dem Innenraum der Gelenkpfanne 6 verbunden.

Der Gleitschuh 2 besteht aus einem Gleitschuhfuß 14 sowie einem Kugelkopf 17. Der Durchmesser des Kugelkopfs 17 korrespondiert mit dem Durchmesser der kugelförmigen Gelenkpfanne 6. Rechtwinklig zur Mittelachse 12 des Gleitschuhs 2 ist an dem Kugelkopf 17 eine Abflachung angebracht. Das so zwischen der Gelenkpfanne 6 und der Abflachung 15 entstehende Volumen dient der Winkelverbindung der Kanäle. Am entgegengesetzten Ende des Gleitschuhfußes 14 ist eine Gleitfläche 10 ausgebildet. Über Nuten 12 wird die Gleitfläche 10 zur hydrostatischen Entlastung mit Hydraulikmedium versorgt. Ein Ölkanal 11 ist entlang der Mittelachse 12 des Gleitschuhs 2 ausgebildet.

Zum Erzeugen einer nicht lösbaren Verbindung zwischen Gleitschuh 2 und Kolben 1 wird der Gelenkpfannenrand 7 in Richtung des Mittelpunkts M des Kugelkopfes 17 umgeformt. Dabei nähert sich die ursprünglich zylinderförmige Innenwand des Gelenkpfannenrands 7 der Kugelgeometrie des Kugelkopfes 17 an.

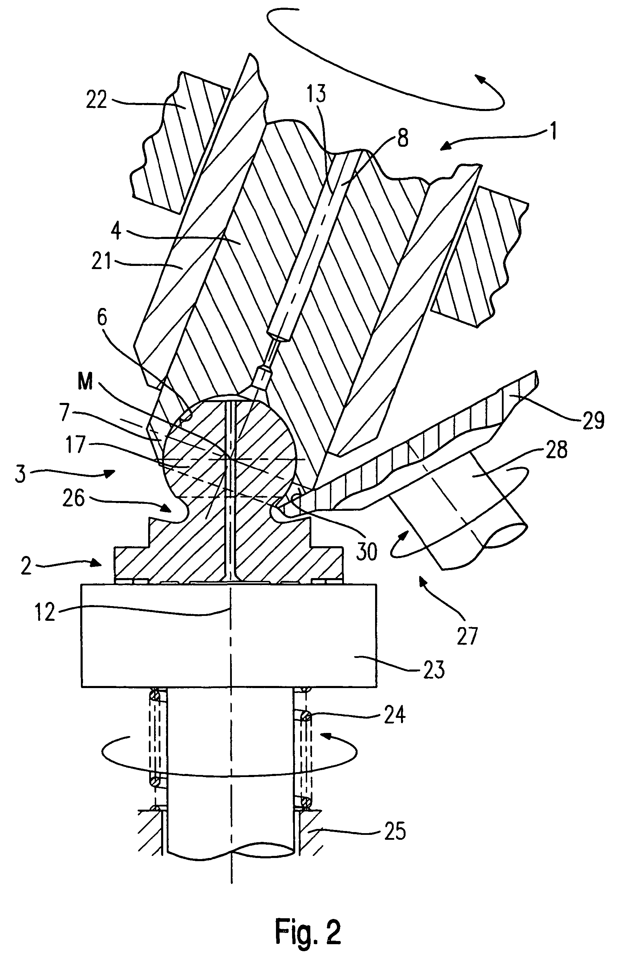

In Fig. 2 ist der Umformschritt des erfindungsgemäßen Fügeverfahrens dargestellt. Der Kolben 1 wird dabei so in einem Spannfutter 21 fixiert, daß eine Rotationsbewegung des Spannfutters 21 auf den Kolben 1 übertragbar ist. Das Spannfutter 21 wird beispielsweise in einer Spannfutterführung 22 geführt. Das Spannfutter 21 ist vorzugsweise in der Spannfutterführung 22 axial verschiebbar, so daß der Kolben 1 auf den Gleitschuh 2 aufgesetzt werden kann.

Der Gleitschuh 2 wird mit seiner Gleitfläche 10 auf einen Tisch 23 aufgesetzt. Der Tisch 23 wird von einer Feder 24, die sich an einem Werkzeughalter 25 abstützt, in Richtung des Gleitschuhs 2 mit Kraft beaufschlagt. Dadurch wird der Gleitschuh 2 mit seinem Kugelkopf 17 in die Gelenkpfanne 6 des Kolbens 1 gedrückt. Wird die Feder 24 zum Positionieren des Gleitschuhs 2 verwendet, so wird das Spannfutter 21 vorzugsweise so positioniert, daß die Mittelachse des Kolbens 1 mit der Mittelachse des Gleitschuhs 2 identisch ist. In dieser Lage wird der Kolben 1 mit der Gelenkpfanne 6 auf den Kugelkopf 17 des Gleitschuhs 2 aufgesetzt und einer vordefinierten Axialkraft ausgesetzt, so daß die Feder 24 vorgespannt wird.

Für den eigentlichen Umformschritt wird der Kolben 1 soweit um den gemeinsamen Mittelpunkt M der Gelenkpfanne 6 sowie des Kugelkopfs 17 geneigt, bis der Gelenkpfannenrand 7 in dem Bereich des Freistichs 18 angeordnet ist. Der Freistich 18 ist über das zur Maschinenbearbeitung erforderliche Maß hinaus zu einer Kehle 26 erweitert, die es ermöglicht, ein Teil eines Bördelwerkzeugs 27 in die Kehle 26 einzuführen, und dort den Gelenkpfannenrand 7 in Richtung des Mittelpunkts M zu verformen. Die Breite und Tiefe der Kehle 26 auf seiten des Kugelkopfs 17 werden entsprechend den elastischen Eigenschaften des Kolbens 1 bemessen.

Das Bördelwerkzeug 27 besteht aus einem Andrückteller 29 und einer Achse 28, die im dargestellten Ausführungsbeispiel fest miteinander verbunden sind. An dem äußeren Bereich des Andrücktellers 29 ist gegenüber der Stirnfläche des Andrücktellers 29 leicht erhöht eine Druckfläche 30 angebracht. Zum Umformen wird das Bördelwerkzeug 27 im Bereich des frei in die Kehle 26 ragenden Gelenkpfannenrandes mit der Druckfläche 30 an den Gelenkpfannenrand 7 angelegt. Durch Ausüben einer axialen Kraft auf das Bördelwerkzeug 27 ist eine lokale Umformung des Gelenkpfannenrandes 7 möglich. Die Verformung geht dabei über das Erreichen einer Kugelfläche der Gelenkpfanne 6 hinaus, so daß nach dem Rückfedern eine Kugelfläche erreicht wird. Der in dem Spannfutter 21 verdrehsicher gehaltene Kolben 1 wird um seine Mittelachse gedreht, so daß der Gelenkpfannenrand 7 über seinen ganzen Umfang gleichmäßig umgeformt wird. Ist ein hoher Umformgrad erforderlich, so kann die Zustellbewegung des Bördelwerkzeugs 27 sich über mehr als eine Umdrehung des Kolbens 1 erstrecken. Die Gesamtzustellbewegung des Bördelwerkzeugs 27 wird in Versuchen gemäß den federelastischen Eigenschaften des Kolbenmaterials eingestellt. Dadurch erreicht die Innenseite des Gelenkpfannenrands 7 nach Rückfedern des elastischen Verformungsanteils die Kugelgeometrie des Kugelkopfs 17.

Im dargestellten Fallbeispiel werden das Spannfutter 21 sowie der Tisch 23 gleichsinnig mit identischer Winkelgeschwindigkeit gedreht. Dadurch kann während des Fügevorgangs die Reibung zwischen dem Kugelkopf 17 und der Gelenkpfanne 6 minimiert werden. Um keine unnötigen Kräfte zur Umformung aufbringen zu müssen, wird das Bördelwerkzeug 27 in entgegengesetzter Richtung gedreht, so daß die Druckfläche 30 sich an der Andrückstelle des Gelenkpfannenrandes 7 mit derselben Umfangsgeschwindigkeit bewegt.

Die korrespondierenden Rotationen des Tisches 23 und des darauf fixierten Gleitschuhs 2 sowie des Bördelwerkzeugs 27 können auch erreicht werden, indem der Tisch 23 sowie der Andrückteller 29 drehbar gelagert sind. Anstelle des Andrücktellers 29, der fest mit der Achse 28 verbunden ist, kann beispielsweise eine auf der Achse drehbar gelagerte Andrückrolle Verwendung finden. Der Antrieb erfolgt indirekt durch die Drehbewegung des Kolbens 1.

Die Umformung des Gelenkpfannenrandes 7 erfolgt lokal in einem kleinen Umfangsbereich. Dadurch kann ein Druck auf den Kugelkopf 17 des Gleitschuhs 2 verhindert werden. Das weiche Material des Gleitschuhs 2 erfährt dadurch keine lokale Kraft und wird nicht verformt. Insbesondere bleibt die Geometrie des Kugelkopfes 17 erhalten, so daß das Kugelgelenk kein erhöhtes Lagerspiel durch vorzeitigen Verschleiß aufweist.

## Patentansprüche

1. Fügeverfahren für eine Kugelgelenkverbindung eines Kolbens (1) einer hydrostatischen Kolbenmaschine mit einem Gleitschuh (2), wobei an einem Ende des Kolbens (1) eine Gelenkpfanne (6) teilkugelförmig ausgeformt ist, an die sich ein Gelenkpfannenrand (7) anschließt und der Kolben (1) aus einem härteren Material gefertigt ist, als der Gleitschuh (2), an dem ein Kugelkopf (17) ausgeformt ist, der eine mit der teilkugelförmigen Geometrie der Gelenkpfanne (6) korrespondierende Teilkugelgeometrie aufweist,
**gekennzeichnet durch** folgende Verfahrensschritte:
- Aufsetzen des Kolbens (1) auf den Kugelkopf (17) des Gleitschuhs (2);
- Neigen des Kolbens (1) gegenüber der Mittelachse (11) des Gleitschuhs (2), bis der Gelenkpfannenrand (7) des Kolbens (1) sich im Bereich eines Freistichs (18) des Gleitschuhs (2) befindet und den Kugelkopf (17) in diesem Bereich nicht berührt;
- Ansetzen eines Bördelwerkzeugs (27) mit einer Druckfläche (30) an der Außenseite des Gelenkpfannenrands (7) im Bereich des Freistichs (18);
- Verformen des Gelenkpfannenrands (7) in Richtung der Mittelachse (13) des Kolbens (1) **durch** Zustellen des Bördelwerkzeugs (27) bei gleichzeitiger Rotation des Kolbens (1) um seine Mittelachse (13);
- Entfernen des Bördelwerkzeugs (27) und Rückfedern des elastischen Verformungsanteils des Gelenkpfannenrands (7).

2. Fügeverfahren nach Anspruch 1,
**dadurch gekennzeichnet,**
**daß** der Kolben (1) und der Gleitschuh (2) während des Umformens des Gelenkpfannenrands (7) gleichsinnig mit identischer Winkelgeschwindigkeit rotieren.

3. Fügeverfahren nach Anspruch 1 oder 2,
**dadurch gekennzeichnet,**
**daß** die Druckfläche (30) des Bördelwerkzeugs (27) eine mit der Umfangsgeschwindigkeit des äußeren Umfangs des Gelenkpfannenrands (7) identische Umfangsgeschwindigkeit an der Berührstelle aufweist.

4. Fügeverfahren nach Anspruch 3,
**dadurch gekennzeichnet,**
**daß** die Andrückkraft der Druckfläche (30) durch ein auf einer Achse (28) des Bördelwerkzeugs (27) drehbar gelagertes Bauteil übertragen wird.

5. Fügeverfahren nach einem der Ansprüche 1 bis 4,
**dadurch gekennzeichnet,**
**daß** der Kugelkopf (17) während des Umformens des Gelenkpfannenrands (7) durch eine Feder (24) in der Gelenkpfanne (6) in Anlage gehalten wird.

6. Fügeverfahren nach einem der Ansprüche 1 bis 5,
**dadurch gekennzeichnet,**
**daß** der Kolben (1) nach Erreichen der Endstellung des Zustellwegs des Bördelwerkzeugs (27) um wenigstens eine vollständige weitere Umdrehung rotiert.

## Claims

1. Joining method for a ball-and-socket joint of a piston (1) of a hydrostatic piston machine with a sliding block (2), a socket (6) of a ball-and-socket joint being partially spherically formed at one end of the piston (1), to which socket a socket edge (7) adjoins, and the piston (1) is manufactured from a harder material than the sliding block (2) on which a ball-shaped head (17) is formed which has a partially spherical geometry corresponding to the partially spherical geometry of the socket (6),
**characterised by** the following method steps:
- placing the piston (1) on the ball-shaped head (17) of the sliding block (2);
- tilting the piston (1) with respect to the centre line (11) of the sliding block (2) until the socket edge (7) of the piston (1) is in the region of an undercut (18) of the sliding block (2) and does not touch the ball-shaped head (17) in this region;
- applying a bordering tool (27) with a pressure surface (30) to the outer side of the socket edge (7) in the region of the undercut (18);
- deforming the socket edge (7) in the direction of the centre line (13) of the piston (1) by advancing the bordering tool (27) with simultaneous rotation of the piston (1) about its centre line (13);
- removing the bordering tool (27) and springing back of the elastically deformed portion of the socket edge (7).

2. Joining method according to claim 1,
**characterised in that**
the piston (1) and the sliding block (2) rotate in the same direction and at identical angular velocity during reshaping of the socket edge (7).

3. Joining method according to claim 1 or 2,
**characterised in that**
the pressure surface (30) of the bordering tool (27) has a circumferential speed at the point of contact which is identical to the circumferential speed of the outer circumference of the socket edge (7).

4. Joining method according to claim 3,
**characterised in that**
the pressure force of the pressure surface (30) is transmitted by a component rotatably mounted on a shaft (28) of the bordering tool (27).

5. Joining method according to any one of claims 1 to 4,
**characterised in that**,
during reshaping of the socket edge (7), the ball-shaped head (17) is kept in abutment in the socket (6) by a spring (24).

6. Joining method according to any one of claims 1 to 5,
**characterised in that**,
after reaching the end position of the advancing path of the bordering tool (27), the piston (1) is rotated by at least one further complete rotation.

## Revendications

1. Procédé d'assemblage pour la liaison par articulation à rotule d'un piston (1) d'un moteur hydrostatique à pistons avec un patin coulissant (2), dans lequel un coussinet de rotule (6) est conformé à une extrémité du piston (1) sous une forme partiellement sphérique, auquel se raccorde une bordure (7) du coussinet de rotule, et le piston (1) est fabriqué en un matériau plus dur que le patin coulissant (2), sur lequel est conformée une tête sphérique (17) qui présente une géométrie partiellement sphérique correspondant à la géométrie partiellement sphérique du coussinet de rotule (6),
**caractérisé par** les étapes suivantes :
- pose du piston (1) sur la tête sphérique (17) du patin coulissant (2) ;
- inclinaison du piston (1) par rapport à l'axe médian (11) du patin coulissant (2), jusqu'à ce que la bordure (7) du coussinet de rotule du piston (1) se trouve dans la région d'une dépouille (18) du patin coulissant (2) et ne touche pas la tête sphérique (17) dans cette région ;
- pose d'un outil de rabattement (27) avec une surface de pressage (30) contre la face extérieure de la bordure (7) du coussinet de rotule dans la région de la dépouille (18) ;
- déformation de la bordure (7) du coussinet de rotule par approche de l'outil de rabattement (27) et rotation simultanée du piston (1) autour de son axe médian (13) ;
- enlèvement de l'outil de rabattement (27) et retour élastique de la partie élastiquement déformée de la bordure (7) du coussinet de rotule.

2. Procédé d'assemblage selon la revendication 1,
**caractérisé en ce que**, pendant la déformation de la bordure (7) du coussinet de rotule, le piston (1) et le patin coulissant (2) tournent dans le même sens à une vitesse angulaire identique.

3. Procédé d'assemblage selon l'une ou l'autre des revendications 1 et 2,
**caractérisé en ce que** la surface de pressage (30) de l'outil de rabattement (27) présente, au niveau du point de contact, une vitesse périphérique identique à la vitesse périphérique de la périphérie extérieure de la bordure (7) du coussinet de rotule.

4. Procédé d'assemblage selon la revendication 3,
**caractérisé en ce que** la force de pressage de la surface de pressage (30) est transmise par un composant monté en rotation sur un axe (28) de l'outil de rabattement (27).

5. Procédé d'assemblage selon l'une des revendications 1 à 4,
**caractérisé en ce que**, pendant la déformation de la bordure (7) du coussinet de rotule, la tête sphérique (17) est maintenue par un ressort (24) en appui dans le coussinet de rotule (6).

6. Procédé d'assemblage selon l'une des revendications 1 à 5,
**caractérisé en ce que**, après avoir atteint la position finale de la course d'approche de l'outil de rabattement (27), le piston (1) est tourné sur au moins un autre tour complet.
